# EUROPÄISCHE PATENTSCHRIFT

(11) **EP 0 666 247 B1**
(45) Veröffentlichungstag und Bekanntmachung des Hinweises auf die Patenterteilung: **08.04.1998**
(21) Anmeldenummer: 95100929.9
(22) Anmeldetag: 25.01.1995
(51) Int. Cl.: C04B 41/51

(54) **Metallimprägnierter Kohlenstoff- oder Graphit-Werkstoff**
Carbon or graphite material impregnated with metal
Matériau en carbone ou graphite impregné de métal

(30) Priorität: 04.02.1994 DE 4403433
(43) Veröffentlichungstag der Anmeldung: 09.08.1995
(73) Patentinhaber: Schunk Kohlenstofftechnik GmbH, D-35452 Heuchelheim (DE)
(72) Erfinder: Ringleb, Ulrich, Dr., D-35396 Giessen (DE); Frisch, Kurt, D-35633 Lahnau (DE); Wiessler, Ulrich, Dr., D-35578 Wetzlar (DE)
(74) Vertreter: Sternagel, Hans-Günther, Dr.

(56) Entgegenhaltungen:
- US-A- 3 157 531
- US-A- 3 396 777
- PATENT ABSTRACTS OF JAPAN vol. 014 no. 439 (C-0761) ,19.September 1990 & JP-A-02 172882 (KAWASAKI REFRACT CO LTD) 4.Juli 1990, & CHEMICAL ABSTRACTS, vol. 113, no. 26, 24.Dezember 1990 Columbus, Ohio, US; abstract no. 236594z,

## Beschreibung

Die vorliegende Erfindung richtet sich auf mit einer Magnesiumlegierung imprägnierte Kohlenstoffwerkstoffe.

Die Imprägnierung von Kohlenstoffwerkstoffen zur Verbesserung der Eigenschaften ist seit langem bekannt.

Metallimprägnierte Werkstoffe werden als Schleifstücke für elektrische Bahnen sowie als Kohlebürsten für Elektromotoren und wegen der Verschleißfestigkeit auch als Gleitwerkstoff etwa für Gleitringdichtungen und Gleitlager verwendet.

Die bekannten Verfahren zur Imprägnierung von Kohlenstoff-Graphit-Werkstoffen mit Metallen werden im wesentlichen durch die Schmelztemperatur des Metalles bzw. der Metallegierung und den Benetzungswinkel der Metallschmelze mit dem Kohlenstoff bestimmt. Da Kohlenstoff-Graphit-Werkstoffe von den meisten Metallen nicht benetzt werden, erfordert die Imprägnierung hohe Temperaturen und erhöhte Drücke. Dadurch entstehen hohe Herstellungs- und Betriebskosten solcher Anlagen.

Aus DE-A-21 65 111 sind Kohlenstoff-Metallgleitbauteile und ein Verfahren zu ihrer Herstellung bekannt durch Imprägnieren gebrannter Kohlenstoffkörper mit geschmolzenem Metall. Verwendet werden Nichteisenmetalle oder Legierungen, beispielsweise Aluminiumlegierungen.

Für Anwendungen, bei denen mit erhöhten thermischen und elektrischen Belastungen zu rechnen ist, verwendet man im allgemeinen Kohlenstoff-Graphit-Werkstoffe, die mit Kupfer, hochschmelzenden Kupferlegierungen, Antimon oder Blei imprägniert sind. Dies ist beispielsweise in DE-OS 31 13 004 erwähnt, um die Dichtigkeit des Matrixmaterials zu erhöhen.

Derartige Verbundwerkstoffe haben neben dem gravierenden Nachteil der Umweltbelastung durch schwermetallhaltige Abriebpartikel den weiteren Nachteil einer relativ hohen Dichte (>2,0 g/cm³). Bei Schleifstücken, die in der Hochgeschwindigkeitstraktion eingesetzt werden, muß die ungedämpfte Masse möglichst klein sein, so daß für das eingesetzte Material eine möglichst geringe Dichte wünschenswert ist.

Für DC-Fernbahnnetze sind andererseits herkömmliche, nicht imprägnierte Kohlenstoff-Graphit-Werkstoffe wegen ihrer geringen elektrischen Belastbarkeit nur eingeschränkt verwendbar.

Weiterhin existieren auch für den Bereich der Gleitlagerwerkstoffe selbstverständlich Nachteile durch das hohe Gewicht der benutzten Werkstoffteile. Durch Herabsetzung des Gewichts etwa von mechanischen Bauelementen in Motoren ließe sich eine Energieeinsparung erreichen.

Es ist Aufgabe der vorliegenden Erfindung, einen Gleitwerkstoff herzustellen, der ohne Zusätze von Schwermetallen auskommt und eine möglichst niedrige Dichte aufweist, wobei die Betriebseigenschaften gegenüber den bisherigen Materialien nicht verschlechtert sein dürfen. Weiterhin soll sich dieser Werkstoff kostengünstig herstellen lassen.

Diese Aufgabe wird gelöst durch einen metallimprägnierten Kohlenstoff- oder Graphit-Werkstoff, gekennzeichnet durch Imprägnierung mit einer Magnesiumlegierung, enthaltend 60-95 Gew.% Magnesium, 0-39 Gew.% Aluminium, 1-5 Gew.% Zink, 0-1 Gew.% Mangan, wobei die Summe der Bestandteile jeweils 100% ergibt. Die Legierung kann gegebenenfalls noch weitere Bestandteile in geringen Mengen enthalten, wobei ein oder mehrere weitere Bestandteile, ausgewählt aus 0-1 Gew.% Si, 0-2 Gew.% Se, 0-1 Gew.% Zr, 0-1 Gew.% Th, enthalten.

Bevorzugt sind Magnesiumlegierungen mit 80-95 Gew.% Magnesium, 0-19 Gew.% Aluminium, ganz besonders bevorzugt mit 90-95 Gew.% Magnesium, 1-9 Gew.% Aluminium, 1-4 Gew.% Zink und 0-1 Gew.% Mangan. Die am meisten bevorzugte Legierung enthält 90 Gew.% Magnesium, 9 Gew.% Aluminium, 1 Gew.% Zink und Spuren von Mangan und sich die Bestandteile stets auf 100% aufsummieren.

Als Basismaterial für den Gleitwerkstoff nach der vorliegenden Erfindung können die bekannten Kohlenstoff- bzw. Graphitwerkstoffe verwendet werden. Kohlenstoffwerkstoffe sind beispielsweise Elektrographit, Hartbrandkohle, Kohlenstoff-Graphit.

Dieses Matrixmaterial wird aus Koks, Ruß, Graphit und Pech als Bindemittel durch thermische Behandlung der zu Grünkörpern verpreßten Ausgangsmischung nach bekannten Verfahren hergestellt. Dabei werden je nach Ausgangsmischung, gewünschter Struktur und Eigenschaft des Materials Temperaturen bis 3000°C angewandt.

Bei der erfindungsgemäßen Imprägnierung des Matrixmaterials mit einer der Imprägnierung zugänglichen Porosität von 5 bis zu 50 Volumen % werden bei dem Einbringen der Metallegierung Bedingungen verwendet, unter denen Bildung von Carbiden größtenteils unterdrückt.

Die Imprägnierung der Kohlenstoffwerkstoffe mit der Metallegierung erfolgt vorzugsweise in inerter Atmosphäre in einem Autoklaven bei Temperaturen von 450°C bis 850 °C und Drücken von 5 bis 100 bar. Als inerte Atmosphäre können Argon und/oder CO₂ verwendet werden.

Als besonders geeignet haben sich Matrixmaterialien mit einem zugänglichen Porenvolumen von 20 bis 40 Vol.% erwiesen. Die Porengrößenverteilung kann 0,1-100 µm betragen.

Etwa 60 bis 95 Vol.% der Poren werden durch die Imprägnierung mit der Magnesiumlegierung gefüllt, so daß das imprägnierte Material von 5 Gew.% bis 30 Gew.% Magnesiumlegierung bezogen auf das Gesamtgewicht des Gleitwerkstoffes enthält.

Durch die Imprägnierungsdauer von 5 bis 30 Min. bei den vorstehend angegebenen Drücken und Temperaturen kommt es praktisch zu keiner Carbidbildung mit einem oder mehreren der Legierungsbestandteile.

Bei erfindungsgemäßer Imprägnierung mit der angegebenen Leichtmetallegierung wird ein Gleitwerkstoff erhalten, der gute Verschleißfestigkeit, hohe mechanische Festigkeit, hohe elektrische Belastbarkeit und niedrigen elektrischen Widerstand aufweist und dessen spezifische Dichte unter 1,9 g/cm³ beträgt.

Die elektrische Leitfähigkeit des Werkstoffs, die in Abhängigkeit von dem benutzten Material schwankt, macht den erfindungsgemäßen Werkstoff insbesondere für elektrotechnische Anwendungen geeignet.

Weiterhin werden durch das Vermeiden von Schwermetallen keine umweltschädlichen Abriebpartikel erzeugt.

Der erfindungsgemäß metallimprägnierte Kohlenstoff-Graphitwerkstoff kann als Gleitwerkstoff für die bekannten Zwecke verwendet werden, beispielsweise Gleitlager, Schieber, rotierende und bewegliche Bauelemente wie z.B. Schleifstücke für Bahnen, Kohlebürsten etc., die neben Verschleißfestigkeit, Chemikalienbeständigkeit auch gute Gleiteigenschaften ohne zusätzliches Schmiermittel aufweisen müssen.

### Beispiel

Ein Schleifstückwerkstoff für elektrische Bahnen aus Kohlenstoff-Graphit-Material mit folgenden Kenndaten (Material A):

| | |
|---|---|
| spez. elektrischer Widerstand | 40 µΩm |
| Härte HR5/40 | 100 |
| Biegebruchfestigkeit | 25 N/mm² |
| Rohdichte | 1,60 g/cm³ |
| Porenvolumen | 35% |

wurde mit einer erfindungsgemäß zu verwendenden Legierung der Zusammensetzung (Mg Al₉Zn) 90 Gew.% Mg, 9 Gew.% Al, 1 Gew.% Zn imprägniert. Die Imprägnierung erfolgt in einem Autoklaven unter Argonatmosphäre.

Die Werkstücke wurden unter einem Druck von 40 bar bei einer Temperatur von 700°C für 15 Min. imprägniert. Durch diese Reaktionsführung wird die Bildung von Carbiden größtenteils unterdrückt.

Folgende physikalische Kenndaten wurden für das so erhaltene Material (Material B) ermittelt:

| | |
|---|---|
| spez. elektrischer Widerstand | 7 µΩm |
| Härte HR5/100 | 120 |
| Biegebruchfestigkeit | 100 N/mm² |
| Rohdichte | 1,85 g/cm³ |

Das Abriebverhalten von Probekörpern wurde bei Gleitgeschwindigkeiten von ca. 13 m/s, bei einem spezifischen Anpreßdruck von 150 cN/cm² und unter stoßartigen Strombelastungen bis 400A bestimmt. Gegenlaufmaterial war Elektrolytkupfer. Folgende Verschleißraten (mm/h) wurden ermittelt:

| A | B |
|---|---|
| 0,21 | 0,03 |

Bei dem Versuch wurde kein Angriff des Gegenlaufmaterials festgestellt.

Zur Überprüfung der thermischen Belastbarkeit wurden Materialproben einem stehenden Lichtbogen ausgesetzt. Dabei wurden geringe Oxidationserscheinungen im Oberflächenbereich des Materials festgestellt. Ein für Magnesium typisches Brandverhalten konnte nicht beobachtet werden. Unmittelbar unter der Oberfläche lag unverändert Metall vor.

Zur Überprüfung der Korrosionsbeständigkeit wurden Proben dem Korrosionstest nach DIN 50021/S unterzogen. Dabei wurden keine die Anwendung störenden Veränderungen gefunden.

## Patentansprüche

1. Metallimprägnierter Kohlenstoff- oder Graphit-Werkstoff,
**gekennzeichnetdurch**
Imprägnierung mit einer Magnesiumlegierung enthaltend 60-95 Gew.% Magnesium, 0-39 Gew.% Aluminium, 1-5 Gew.% Zink, 0-1 Gew.% Mangan, wobei die Summe der Bestandteile jeweils 100% ergibt.

2. Metallimprägnierter Kohlenstoff- oder Graphit-Werkstoff nach Anspruch 1,
**dadurch gekennzeichnet**,
daß die Magnesiumlegierung noch ein oder mehrere weitere Bestandteile ausgewählt aus 0-1 Gew.% Si, 0-2 Gew.% Se, 0-1 Gew.% Zr, 0-1 Gew.% Th enthält.

3. Metallimprägnierter Kohlenstoff- oder Graphit-Werkstoff nach Anspruch 1,
**dadurch gekennzeichnet**,
daß das Matrixmaterial Elektrographit oder Hartbrandkohle ist.

4. Metallimprägnierter Kohlenstoff- oder Graphit-Werkstoff nach einem der vorstehenden Ansprüche,
**dadurch gekennzeichnet**,
daß er 5 Gew.% bis 30 Gew.% bezogen auf Gesamtgewicht Magnesiumlegierung enthält.

5. Metallimprägnierter Kohlenstoff- oder Graphit-Werkstoff nach einem der vorstehenden Ansprüche,
**dadurch gekennzeichnet**,
daß von 60 bis 95 Vol.% des Porenvolumens des Matrixmaterials nach der Imprägnierung mit der Magnesiumlegierung gefüllt sind.

6. Verwendung des Kohlenstoff- oder Graphit-Werkstoffes nach einem der vorstehenden Ansprüche als elektrisch leitendes Kontaktmaterial, Gleitwerkstoff oder für mechanische Bauteile.

## Claims

1. A metal-impregnated carbon or graphite material, characterised by impregnation with a magnesium alloy containing 60-95% by weight magnesium, 0-39% by weight aluminium, 1-5% by weight zinc, 0-1% by weight manganese, the total of the constituents being 100% each time.

2. A metal-impregnated carbon or graphite material according to Claim 1, characterised in that the magnesium alloy additionally contains one or more further constituents, selected from 0-1% by weight Si, 0-2% by weight Se, 0-1% by weight Zr and 0-1% by weight Th.

3. A metal-impregnated carbon or graphite material according to Claim 1, characterised in that the matrix material is electrographite or hard-burned coal.

4. A metal-impregnated carbon or graphite material according to one of the preceding claims, characterised in that it contains 5% by weight to 30% by weight, relative to total weight, magnesium alloy.

5. A metal-impregnated carbon or graphite material according to one of the preceding claims, characterised in that from 60 to 95% by volume of the pore volume of the matrix material are filled with the magnesium alloy after impregnation.

6. The use of the carbon or graphite material according to one of the preceding claims as an electrically conductive contact material, low-friction material or for mechanical components.

## Revendications

1. Matériau de carbone ou de graphite imprégné de métal, caractérisé en ce que l'imprégnation est obtenue avec un alliage de magnésium contenant 60 à 95% en poids de magnésium, 0 à 39% en poids d'aluminium, 1 à 5% en poids de zinc, 0 à 1% en poids de manganèse, la somme des composants valant dans chaque cas 100%.

2. Matériau de carbone ou de graphite imprégné de métal suivant la revendication 1, caractérisé en ce que l'alliage de magnésium contient de plus un ou plusieurs autres composants choisis parmi 0 à 1% en poids de Si, 0 à 2% en poids de Se, 0 à 1% en poids de Zr, 0 à 1% en poids de Th.

3. Matériau de carbone ou de graphite imprégné de métal suivant la revendication 1, caractérisé en ce que le matériau de la matrice est de l'électrographite ou du charbon couvert.

4. Matériau de carbone ou de graphite imprégné de métal suivant l'une quelconque des revendications précédentes, caractérisé en ce qu'il contient 5% en poids à 30% en poids par rapport au poids total d'alliage de magnésium.

5. Matériau de carbone ou de graphite imprégné de métal suivant l'une quelconque des revendications précédentes, caractérisé en ce que 60 à 95% en volume du volume des pores du matériau de la matrice est rempli de l'alliage de magnésium après l'imprégnation.

6. Utilisation du matériau de carbone ou de graphite selon l'une quelconque des revendications précédentes comme matériau de contact conducteur de l'électricité, comme lubrifiant ou comme composant métallique.
